# EUROPEAN PATENT APPLICATION

(11) **EP 4 699 691 A1**
(43) Date of publication of application: **25.02.2026**
(21) Application number: 24792594.4
(22) Date of filing: 11.04.2024
(51) Int. Cl.: B01J 19/12, B01J 21/18, B01J 35/39, C01B 3/04, C01B 32/40

(54) **REDUCTION DEVICE, REDUCTION METHOD, AND PRODUCTION METHOD FOR REDUCTION PRODUCT**

(30) Priority: 18.04.2023 JP 2023068121; 01.06.2023 JP 2023091231
(71) Applicant: Daicel Corporation, Osaka-shi, Osaka 530-0011 (JP); National University Corporation Kanazawa University, Ishikawa 920-1192 (JP)
(72) Inventor: YOSHIKAWA, Taro, Tokyo 108-8230 (JP); KAGA, Akira, Tokyo 108-8230 (JP); MAHIKO, Tomoaki, Tokyo 108-8230 (JP); ASAKAWA, Hitoshi, Kanazawa-shi, Ishikawa 920-1192 (JP); TOKUDA, Norio, Kanazawa-shi, Ishikawa 920-1192 (JP); YAMASAKI, Satoshi, Kanazawa-shi, Ishikawa 920-1192 (JP); MATSUMOTO, Tsubasa, Kanazawa-shi, Ishikawa 920-1192 (JP); ICHIKAWA, Kimiyoshi, Kanazawa-shi, Ishikawa 920-1192 (JP)
(74) Representative: Grünecker Patent- und Rechtsanwälte PartG mbB
(86) International application number: PCT/JP2024/014696
(87) International publication number: WO 2024/219319

(57) **Abstract**

Provided is a reduction device that can be manufactured inexpensively and easily, has a wide reaction field, can achieve a reduction reaction even with low energy light such as visible light, and has a long catalyst life. The reduction device of the present disclosure includes diamond particles. It is preferable to contain the diamond particles as a diamond particle dispersion liquid. The diamond particles preferably contain nanodiamond particles having a particle size of 1 µm or less. The diamond particles preferably include detonation nanodiamond particles.

## Description

### Technical Field

The present disclosure relates to a reduction device, a reduction method, and a method for producing a reduction product. The present application claims priority to JP 2023-068121 filed in Japan on April 18, 2023 and JP 2023-091231 filed in Japan on June 1, 2023, the contents of which are incorporated herein by reference.

### Background Art

Although fossil fuels such as petroleum have been widely used as energy, as environmental problems such as global warming due to carbon dioxide (CO₂) and the like contained in exhaust gas and the like and depletion of fuel resources have become apparent, a carbon recycling technology for reducing CO₂ to useful chemicals such as carbon monoxide (CO), a reduction technology for producing hydrogen (H₂) that can be an alternative energy source for fossil fuels from water, and the like have attracted attention. Furthermore, as an energy source for performing such a reduction reaction, it is desirable to use clean energy (for example, sunlight, etc.) having a low environmental load instead of known fossil fuels; therefore, reduction technologies using ultraviolet rays or visible light contained in sunlight or electric power that can be generated by solar power generation have been actively developed.

Patent Document 1 describes that CO₂ is reduced to produce CO through an electrochemical reaction using a reduction electrode provided with a catalyst layer that carries a precious metal such as Au, Ag, or Pt.

Patent Document 2 indicates that in an electrochemical reaction using a reduction electrode containing a boron-doped diamond, irradiation with deep ultraviolet light excites electrons in the boron-doped diamond, and further application of a voltage causes a CO₂ reduction reaction to efficiently proceed.

NPTL 1 describes that when nanodiamond particles are irradiated with visible light, electrons in the nanodiamond particles are excited, and the electrons are emitted to the vicinity of a surface of the nanodiamond particles.

### Citation List

### Patent Document

Patent Document 1: JP 2020-132965 A
Patent Document 2: JP 2017-100901 A

### Non-Patent Literature

NPTL 1: Nanoscale, (English), 2022, vol. 14, p. 17188-17195

### Summary of Invention

### Technical Problem

However, the method of Patent Document 1 has problems: for example, a noble metal catalyst is generally very expensive, a catalyst life is not sufficiently long, and a reaction field is limited because a molecule to be reduced needs to be in contact with a catalyst surface.

The invention of Patent Document 2 has also problems: for example, a plate-shaped electrode catalyst such as a reduction electrode containing diamond generally requires a complex production process and has a high production cost, a reaction field is limited because the plate-shaped electrode catalyst is plate-shaped, and application of a voltage from the outside and irradiation of high-energy ultraviolet light are required to progress the CO₂ reduction reaction.

In NPTL 1, although the emission of electrons that can lead to the progress of the reduction reaction has been confirmed, the emission has not been applied to an actual reduction reaction, and realization of a specific reduction reaction using a low energy ray such as visible light is required.

Therefore, an object of the present disclosure is to provide a reduction device that can be manufactured inexpensively and easily, has a wide reaction field, can achieve a reduction reaction even with low energy light such as visible light, and has a long catalyst life.

Another object of the present disclosure is to provide a reduction method capable of reducing a reducible substance by irradiation with visible light.

Another object of the present disclosure is to provide a method for producing a reduction product by irradiation with visible light.

### Solution to Problem

As a result of diligent research to solve the problems described above, the present inventors discovered the following. That is, the present disclosure has been completed based on the following findings:
1. when a diamond particle dispersion liquid is irradiated with visible light, CO₂ and H₂O are easily reduced to produce CO and H₂ even without application of a voltage from the outside as required for a plate-shaped electrode; and
2. the diamond particle dispersion liquid is a solution in which diamond is dispersed, and can be produced more inexpensively and easily than a general plate-shaped electrode.

That is, the present disclosure provides a reduction device including a diamond particle dispersion liquid.

### Advantageous Effects of Invention

The reduction device of the present invention easily emits electrons by irradiation with visible light, and forms a reaction field excellent in reducibility. Since a reaction can proceed in the vicinity of each surface of the diamond particles, the diamond particles have a large specific surface area and a wide reaction field. Furthermore, the reduction device can be manufactured by an inexpensive and simple method of dispersing the diamond particles in a solution. Thus, the reduction device is suitable as a reduction device using visible light which is a low energy ray or a reduction device of a low environmental load type using sunlight which is a representative clean energy.

### Brief Description of Drawings

FIG. 1 is a schematic diagram of an experimental system for evaluating CO₂ reduction capability.
FIG. 2 is a graph showing evaluation results of CO₂ reduction capability of Examples 1 to 6 and Comparative Examples 1 to 4.

### Description of Embodiments

### [Reduction Device]

A reduction device of the present disclosure includes at least diamond particles. A solvent for dispersing the diamond particles may or may not be contained. When the solvent is not contained, the diamond particles may be contained in a gas phase or a solid phase. In addition, components other than these components may be contained. The diamond particles can emit electrons by irradiation with visible light regardless of the surrounding environment, and can cause a reduction reaction with respect to a substance in the surrounding environment.

### (Diamond particle)

In the present specification, primary particles of the diamond particles have a size (average primary particle size: D50) of, for example, from 1 nm to 100 µm. The upper limit of the average primary particle size is preferably 10 µm, more preferably 1 µm, still more preferably 200 nm, even more preferably 100 nm, further more preferably 50 nm, still further more preferably 30 nm, and particularly preferably 20 nm. The lower limit of the average primary particle size is not particularly limited, and is, for example, 1 nm. In the present specification, the diamond particles having an average primary particle size of less than 1 µm may be referred to as nanodiamond particles.

The shape of the diamond particles is not particularly limited, and examples thereof include a spherical shape (e.g., a true spherical shape, a substantially true spherical shape, an elliptically spherical shape), a polyhedral shape, a rod shape (e.g., a cylindrical shape, a prismatic shape), a planar plate shape, a flaky shape, and an irregular shape.

As the diamond particles, for example, detonation nanodiamond (that is, nanodiamond produced by a detonation method), high pressure-high temperature nanodiamond (that is, bulk diamond produced by a high pressure and high temperature method is crushed into nanoparticles), or chemical vapor deposition nanodiamond (that is, thin film diamond obtained by chemical vapor deposition method is crushed into nanoparticles) can be used. Of these, the detonation nanodiamond is preferable in that primary particles have a particle size of a single-digit nanometer.

Examples of the detonation nanodiamond include an air-cooled detonation nanodiamond (that is, nanodiamond produced by an air-cooled detonation method) and a water-cooled detonation nanodiamond (that is, nanodiamond produced by a water-cooled detonation method). Of these, an air-cooled detonation nanodiamond is preferred in that primary particles are smaller than those of a water-cooled detonation nanodiamond. The nanodiamond particles may be primary particles of nanodiamond or may be secondary particles in which a plurality of the primary particles are aggregated (agglutinated), or an aggregate (cluster).

The diamond particles are not particularly limited, and known or commonly used diamond particles can be used. The diamond particles may be diamond particles whose surfaces are modified or may be diamond particles whose surfaces are not modified. The diamond particles whose surfaces are not modified have many hydroxy groups (-OH), carboxy groups (-COOH), and carbonyl groups (-C=O) on the surfaces. A single type of diamond particles may be used, or two or more types may be used.

The compound or functional group for modifying the surfaces of the diamond particles in the surface-modified diamond particles is not particularly limited, and examples thereof include a hydrogen group (C-H group), a silane compound, a phosphonate ion or a phosphonate residue, a surface-modifying group having a vinyl group at a terminal, an amide group, a cation of a cationic surfactant, a group containing a polyglycerin chain, and a group containing a polyethylene glycol chain.

In the present specification, diamond particles having a hydrogen group on the surface may be referred to as hydrogen-terminated diamond particles. Specifically, the diamond particle means diamond having a C-H bond on at least a part of the surface by bonding a hydrogen (H) atom to a carbon (C) atom constituting a diamond structure of the diamond particles. Although hydrogen termination can be performed by a known or commonly used method, for example, by subjecting the diamond particles to a hydrogenation treatment in a gas phase, diamond particles having many C-H groups on the surface can be produced.

The diamond particles preferably have at least one of a hydroxy group, a carboxy group, a carbonyl group, or a hydrogen group on the surface. Among them, the diamond particles preferably have any one of a hydroxy group, a carboxy group, and a carbonyl group. When the diamond particles have these functional groups, the efficiency of the reduction reaction tends to be improved.

As for the diamond particles, the diamond particles having many hydroxy groups, carboxy groups, and/or carbonyl groups on the surface, such as diamond particles which are not surface-modified, tend to have a negative zeta potential due to an oxygen-based functional group. On the other hand, for example, the diamond particles having many hydrogen groups on the surface by a reduction treatment such as a hydrogenation treatment tend to have a positive zeta potential by being surface-terminated with hydrogen. When the zeta potential of the diamond particles becomes negative or positive as described above, dispersibility in the solvent is improved by electric repulsive force. In addition, the dispersion stabilization tends to increase a specific surface area of the diamond particles in the solvent, and further improve the efficiency of the reduction reaction.

The zeta potential of the diamond particles may be negative or positive. Among them, the zeta potential of the diamond particles is preferably negative. When the diamond particles having a negative zeta potential are used, the efficiency of the reduction reaction tends to be improved.

In the present specification, the fact that the zeta potential of the diamond particles is positive means that a value of zeta potential measured when the diamond particles are dispersed in an aqueous solvent having an ion concentration of 0.0001 M or less and a pH of 5 or less at 25°C by, for example, laser Doppler electrophoresis is a positive value. The zeta potential is, for example, from + 20 to 80 mV, preferably from + 30 to 70 mV, and more preferably from + 40 to 60 mV. The zeta potential larger than the lower limit is preferable because the electric repulsive force between the diamond particles is sufficiently increased, and the efficiency of the reduction reaction tends to be improved because the dispersion is stabilized.

In the present specification, the fact that the zeta potential of the diamond particles is negative means that the value of zeta potential measured when the diamond particles are dispersed in an aqueous solvent having an ion concentration of 0.0001 M or less and a pH of 9 or more at 25°C by, for example, laser Doppler electrophoresis is a negative value. The zeta potential is, for example, from -80 to -20 mV, preferably from -70 to -30 mV, and more preferably from -60 to -40 mV. The zeta potential which is negatively larger than the upper limit (that is, an absolute value of the zeta potential is larger than an absolute value of the upper limit) is preferable because the electric repulsive force between the diamond particles is sufficiently increased, and the efficiency of the reduction reaction tends to be improved because the dispersion is stabilized.

When the diamond particles have a hydroxy group on the surface, a proportion of hydroxy group-bonded carbon (C-OH) is, for example, 10.0% or more, preferably 12.0% or more, more preferably 14.0% or more, still more preferably 16.0% or more, and particularly preferably 17.0% or more based on 100% of carbon contained in the diamond particles. The upper limit of the proportion of the hydroxy group-bonded carbon is, for example, 40.0%. The hydroxy group-bonded carbon means, in the basic skeleton of diamond, carbon of a basic skeleton of diamond to which a hydroxy group as a surface functional group is bonded. The proportion of the hydroxy group-bonded carbon can be measured by, for example, solid ¹³C-NMR analysis.

When the diamond particles have a carboxy group on the surface, the proportion of carboxy carbon (C(=O)O) is, for example, 0.4% or more, preferably 0.6% or more, more preferably 0.8% or more, and still more preferably 1.0% or more based on 100% of carbon contained in the diamond particles. The upper limit of the proportion of carboxy carbon is, for example, 5.0%. The carboxy carbon means a carbon contained in a carboxy group (-C(=O)O containing -COOH) which is a surface functional group. The proportion of the carboxy carbon can be measured by, for example, solid ¹³C-NMR analysis.

When the diamond particles have a carbonyl group on the surface, a proportion of carbonyl carbon (C=O) is, for example, 0.4% or more, preferably 0.6% or more, more preferably 0.8% or more, and still more preferably 1.0% or more based on 100% of carbon contained in the diamond particles. The upper limit of the proportion of the carbonyl carbon is, for example, 5.0%. The carbonyl carbon means a carbon contained in a carbonyl group (-C=O) which is a surface functional group. The carbon contained in -C(=O)O does not belong to the carbonyl carbon. The proportion of the carbonyl carbon can be measured by, for example, solid ¹³C-NMR analysis.

A proportion of the hydrogen-bonded carbon is, for example, 8.0% or more, preferably 9.0% or more, more preferably 10.0% or more, and still more preferably 12.0% or more, based on 100% of carbon contained in the hydrogen-terminated diamond particles. The hydrogen-bonded carbon is a carbon bonded to a hydrogen atom present in a surface functional group. When the proportion of the hydrogen-bonded carbon is 8.0% or more, this contributes to stabilization of surface carbon of the diamond particles. The proportion of the hydrogen-bonded carbon can be measured by, for example, solid ¹³C-NMR analysis.

The hydrogen atom concentration in the hydrogen-terminated diamond particles is, for example, from 0.01 to 10 mass%, preferably from 0.1 to 10 mass%, and more preferably from 1.0 to 10 mass%, based on 100 mass% of the hydrogen-terminated diamond particles. When the hydrogen atom concentration in the diamond particles is in such a range, the efficiency of the reduction reaction tends to be excellent. The hydrogen atom concentration can be measured by known or commonly used CHN elemental analysis (Elemental Analysis (Carbon, Hydrogen, Nitrogen): EA).

The diamond particles may or may not contain nitrogen atoms. Among them, when the nitrogen atoms are contained, excitation of electrons is likely to occur from an impurity level due to the nitrogen atoms, and the reduction reaction may easily proceed; therefore, it is preferable to contain the nitrogen atom.

In the present specification, a site containing a nitrogen atom is not limited. That is, the diamond particles include a core part formed from sp3 carbons and a shell part formed from sp2 carbons, and the nitrogen atom may be contained in the core part or in the shell part. Further, the nitrogen atom may be contained in the boundary between the core part and the shell part. The nitrogen atoms can be introduced into the diamond particles by a known or commonly used method For example, as for detonation nanodiamond particles produced using an explosive containing nitrogen atoms (such as trinitrotoluene), the nitrogen atoms are introduced into the nanodiamond particles upon detonation.

The nitrogen atom concentration in the diamond particles is, for example, preferably from 0.1 to 10 mass%, and more preferably from 1.0 to 5 mass%, based on 100 mass% of the diamond particles. When the nitrogen atom concentration in the diamond particles is in such a range, excitation of electrons may easily occur from the impurity level due to the nitrogen atoms. The nitrogen atom concentration of the diamond particles can be measured by known or commonly used CHN elemental analysis, ICP emission spectrometry (Inductively Coupled Plasma Atomic Emission Spectroscopy: ICP-AES), or secondary ion mass spectrometry (SIMS).

### (Solvents)

The solvent of the diamond particle dispersion liquid may be an aqueous solvent or an organic solvent, and is not particularly limited. Examples thereof include water, alcohols such as ethanol, methanol, 1-propanol, 2-propanol, n-butanol, isobutyl alcohol, t-butanol, n-pentanol, isopentanol, hexanol, octanol, and diacetone alcohol; esters such as ethyl acetate, butyl acetate, ethyl lactate, propylene glycol monomethyl ether acetate, propylene glycol monoethyl ether acetate, and γ-butyrolactone; ethers such as diethyl ether, ethylene glycol monomethyl ether, ethylene glycol monoethyl ether, ethylene glycol monobutyl ether, diethylene glycol monomethyl ether, and diethylene glycol monoethyl ether; ketones such as acetone, methyl ethyl ketone, methyl isobutyl ketone, acetylacetone, and cyclohexanone; amides such as dimethylformamide, N,N-dimethylacetoacetamide, and N-methylpyrrolidone; and glycols such as ethylene glycol, diethylene glycol, and propylene glycol. A single type of the solvent may be used, or two or more types thereof may be used. Water is preferable from the viewpoint of safety, handleability, and the like.

### (Diamond particle dispersion liquid)

The concentration of the diamond particles in the diamond particle dispersion liquid is, for example, from 0.01 to 10 mass%, preferably from 0.1 to 9 mass%, more preferably from 0.5 to 8 mass%, still more preferably from 1 to 7 mass%, even more preferably from 2 to 7 mass%, and particularly preferably from 3 to 6 mass%. When the concentration of the diamond particles in the diamond particle dispersion liquid is 0.01 mass% or more, the amount of the diamond particles is sufficient, and the reduction reaction easily proceeds sufficiently. When the concentration of the diamond particles in the diamond particle dispersion liquid is 10 mass% or less, the diamond particles are easily dispersed in the solvent, so that cost effectiveness is easily obtained.

The diamond particle dispersion liquid may contain only the diamond particles and the solvent, or may contain an additional component. Examples of the additional component include hole consuming agents (for example, alcohols such as ethanol, and sodium sulfite), surfactants, thickeners, coupling agents, dispersants, rust inhibitors, corrosion inhibitors, freezing point depressants, antifoaming agents, antiwear additives, antiseptics, and colorants. Since the hole consuming agent supplies electrons to the diamond particles, the reduction reaction is accelerated, and the reaction efficiency is improved.

A content ratio of the additional component to the total amount of the diamond particle dispersion liquid is, for example, 30 mass% or less, preferably 20 mass% or less, still more preferably 10 mass% or less, even more preferably 5 mass% or less, and particularly preferably 1 mass% or less. Therefore, the total content ratio of the diamond particles and the solvent (particularly water) to the total amount of the diamond particle dispersion liquid is, for example, 70 mass% or more, preferably 80 mass% or more, more preferably 90 mass% or more, still more preferably 95 mass% or more, and particularly preferably 99 mass% or more.

In the diamond particle dispersion liquid, the diamond particles are dispersed in the solvent. At this time, the diamond particles may be in an aggregate (cluster) state or in a highly dispersed state. An average dispersed particle size (D50, median diameter) of the diamond particles in the diamond particle dispersion liquid is, for example, from 1 nm to 100 µm. The upper limit of the average dispersed particle size is preferably 10 µm, more preferably 1 µm, still more preferably 200 nm, even more preferably 100 nm, further more preferably 50 nm, still further more preferably 30 nm, and particularly preferably 20 nm. The lower limit of the average dispersed particle size is not particularly limited, and is, for example, 1 nm. The efficiency of the reduction reaction tends to be improved as the average dispersed particle size is smaller, that is, as the diamond particles are more highly dispersed. The average dispersed particle size can be measured using a dynamic light scattering method.

In the present specification, among the diamond particle dispersion liquid, the dispersion liquid in which the diamond particles are dispersed in the aggregate (cluster) state, that is, the average dispersed particle size is 50 nm or more may be referred to as a cluster dispersion liquid. The dispersion liquid in which the diamond particles are highly dispersed, that is, the average dispersed particle size is less than 50 nm may be referred to as a high dispersion liquid.

The diamond particle dispersion liquid has a haze value of preferably 90% or less, more preferably 70% or less, still more preferably 50% or less, even more preferably 30% or less, further more preferably 10% or less, still further more preferably 5% or less, and particularly preferably 1% or less. The efficiency of the reduction reaction is improved as the haze value is smaller, that is, as the diamond particles are more highly dispersed. The haze value can be measured based on JIS K 7136.

Without being bound to any theory, when the reduction device of the present disclosure includes the diamond particle dispersion liquid, the higher the dispersion of the diamond particles, the larger the specific surface area of the diamond particles. As a result, it is presumed that a reaction field of the reduction reaction increases, the efficiency of electron emission is improved, and further, the efficiency of the reduction reaction is improved. When the reduction device of the present disclosure does not contain a solvent and the diamond particles are present in the gas phase or the solid phase, the present disclosure is not limited to the above.

The diamond particles contained in the reduction device of the present disclosure are generally known as very physically and chemically stable substances. Thus, since the diamond particles can be stably present even in the presence of an acid, an alkali, or ultraviolet rays, it is presumed that a long catalyst life can be achieved.

### [Method for Manufacturing Reduction Device]

The reduction device can be manufactured by introducing the diamond particles into a container. When the reduction device contains the diamond particle dispersion liquid, the diamond particle dispersion liquid can be produced from the diamond particles and the solvent.

A method for manufacturing the reduction device is not particularly limited, and an example thereof is a method for manufacturing the reduction device through the following steps:
Step 1a: dispersing the diamond particles in the solvent to prepare the diamond particle dispersion liquid (cluster dispersion liquid);
Step 1b: dispersing the diamond particles in the solvent to prepare the diamond particle dispersion liquid (high dispersion liquid); and
Step 2: putting the diamond particle dispersion liquid in a container to produce a reduction device.

### (Step 1a)

A method for preparing the diamond particle dispersion liquid (cluster dispersion liquid) is not particularly limited, and the diamond particle dispersion liquid can be prepared by a known or commonly used method. Examples thereof include a method in which the diamond particles and the solvent are placed in a container and stirred, and a method of performing an ultrasonic treatment. In addition, these methods may be implemented in combination. In this step, the aggregate of the diamond particles is not highly dispersed; therefore, in the diamond particles, the aggregate (cluster) is main, and the average dispersed particle size is 50 nm or more.

The treatment temperature in the above step is not particularly limited. For example, the temperature can be appropriately set in a range of from 0°C to 100°C. Among them, from 10°C to 40°C is preferable from the viewpoint of workability.

### (Step 1b)

A method for preparing the diamond particle dispersion liquid (high dispersion liquid) is not particularly limited, and the diamond particle dispersion liquid can be prepared by a known or commonly used method. Examples thereof include a method in which the diamond particles and the solvent are put in a container and stirred, a method of performing an ultrasonic treatment, and a method of performing a crushing treatment using a ball mill, a bead mill, and a high-pressure homogenizer. In addition, these methods may be implemented in combination. In this step, the aggregate of the diamond particles is highly dispersed; therefore, the diamond particles are highly dispersed, and the average dispersed particle size is less than 50 nm. By using, as the diamond particles, surface-modified diamond surface-modified with, for example, a group containing a polyglycerin chain and the like, a diamond particle dispersion liquid (high dispersion liquid) can be more easily prepared.

The treatment temperature in the above step is not particularly limited. For example, the temperature can be appropriately set in a range of from 0°C to 100°C. Among them, from 10°C to 40°C is preferable from the viewpoint of workability.

### (Step 2)

The container for containing the diamond particle dispersion liquid is not particularly limited, and a known or commonly used container can be employed. For example, examples of a reducible substance to be reduced include a liquid such as water and a gas such as CO₂, and therefore, it is preferable to use a sealable container. To use light as an energy source for the reduction reaction, it is preferable to use a container through which light passes.

A constituent material of the container is not particularly limited, and examples thereof include glass and resin. Examples of the glass include soda-lime glass, borosilicate glass, aluminosilicate glass, quartz glass, and alkali-free glass. Examples of the resin include substrates including a polyolefin-based resin, a polyolefin-based copolymer resin, a polyester-based resin, an acryl-based resin, a polyamide-based resin, a polyimide-based resin, a polycarbonate-based resin, a phenol-based resin, an epoxy-based resin, a silicon-based resin, a styrene-based resin, a fluorine-based resin, a urethane-based resin, and the like. Among the constituent materials, a single type may be used alone or two or more types may be used in combination. The size and shape of the container are also not particularly limited.

The container may include an inlet for introducing a gas to efficiently take the reducible substance into the container. The inlet may or may not be immersed in the dispersion liquid such that bubbling can be performed to efficiently dissolve the gas in the diamond particle dispersion liquid. A stirrer may be provided in the container to efficiently bring the reducible substance into contact with the diamond particles.

The container may include a light source to efficiently take light into the container. The light source is not particularly limited, and examples thereof include a fluorescent lamp and a mercury xenon light source. Alternatively, sunlight may be used as the light source. From the viewpoint of safety, the light source may include an optical filter that cuts ultraviolet rays.

### [Method for Producing Reduction Product Using Reduction Device]

In the presence of the reduction device, the reducible substance can be reduced to produce a corresponding reduction product. The reducible substance is not particularly limited, and examples thereof include liquids, gases, and solids. Specific examples thereof include water (H₂O) and carbon dioxide (CO₂). Examples of the reduction product produced by reducing the reducible substance include hydrogen (H₂) produced by reducing water (H₂O) and carbon monoxide (CO) produced by reducing carbon dioxide (CO₂). Hydrogen (H₂) and carbon monoxide (CO) produced in the presence of the reduction device can be used as various chemical raw materials.

The reduction reaction includes the following:
[1] The reducible substance only receives electrons from hydrated electrons (decomposition reaction is not included);
[2] The reducible substance receives and decomposes electrons from the hydrated electrons;
[3] The hydrated electrons react with water molecules to produce hydrogen radicals, and the produced hydrogen radicals reduce the reducible substance.

The reduction reaction is preferably performed in an aqueous solvent. When the above reaction is performed in the aqueous solvent, electrons released from the catalyst react with water to form hydrated electrons (e_{aq}⁻). The formed hydrated electrons can be stably present in the aqueous solvent, and can reduce the reducible substance in the aqueous solvent to efficiently produce the corresponding reduction product.

Examples of the other reducible substances include O₂, N₂, NO, N₂O, contaminants (for example, organic or inorganic compounds), organic fluorine compounds (alternatively, fluorinated hydrocarbon), metal ions, and metal complex ions.

The reducible substance and the corresponding reduction product are shown below.

### [Table 1]

**Table 1**

| Reducible substance | Reduction product |
|---|---|
| CO₂ | CO₂⁻ |
| | CO |
| | HCOO⁻ |
| | C₂O₄²⁻ |
| N₂ | NH₃ |
| NO | NO⁻ |
| N₂O | N₂⁺O⁻ |
| O₂ | O₂⁻ |
| | H₂O₂ |
| H₂O | H₂ |
| Perfluoroalkyl compound | Defluorinated compound (alkyl compound) |
| Perfluorobenzene | Defluorinated compound (benzene) |

### [Table 2]

**Table 2**

| Reducible substance | Reduction product |
|---|---|
| Fe(CN)₆³⁻ | Fe(CN)₆⁴⁻ |
| Cu²⁺ | Cu⁺ |
| Ag⁺ | Ag |
| Zn²⁺ | Zn⁺ |
| Co²⁺ | Co⁺ |
| Ni²⁺ | Ni⁺ |
| Cd²⁺ | Cd⁺ |
| Co(NH₃)₆³⁺ | Co(NH₃)₆²⁺ |
| [Cr(CrO₄)₃]³⁺ | [Cr(CrO₄)₃]²⁺ |
| [Cr(en)₃]³⁺ | [Cr(en)₃]²⁺ |
| Eu³⁺ | Eu²⁺ |
| Yb³⁺ | Yb²⁺ |
| Sm³⁺ | Sm²⁺ |
| Tm³⁺ | Tm²⁺ |
| Ho³⁺ | Ho²⁺ |

| | |
|---|---|
| en: ethylenediamine | |

A method for reducing the reducible substance is only required to be a method in which electrons emitted from the diamond particles are reacted with the reducible substance under visible light irradiation, and in particular, it is preferable to introduce the reducible substance into the diamond particle dispersion liquid from the viewpoint that the electrons emitted from the diamond particles are in contact with the reducible substance to efficiently produce a reduction product. A method for introducing the reducible substance into the diamond particle dispersion liquid can be appropriately carried out according to the kind of the reducible substance. For example, when the reducible substance is in a liquid or solid state, the reducible substance can be introduced into the diamond particle dispersion liquid by a method of dissolving or dispersing the reducible substance in the diamond particle dispersion liquid. When the reducible substance is in a gas state, the reducible substance can be introduced into the diamond particle dispersion liquid by a method of bubbling the reducible substance in the diamond particle dispersion liquid.

When the reducible substance is a gas, a flow rate for introducing the gas of the reducible substance into the reduction device is not particularly limited, and can be appropriately adjusted depending on a diameter of the inlet and a liquid amount of the diamond particle dispersion liquid. For example, the flow rate can be from 1 mL/min to 100 mL/min.

The wavelength of light emitted from the light source in the presence of the reduction device is not particularly limited. For example, a wavelength of from 10 nm to 100 µm can be used. Among them, a wavelength of from 400 to 1500 nm is exemplified. The wavelength does not need to be a single wavelength, and may have a distribution.

The reduction reaction can proceed using sunlight as a light source. In addition, the reduction reaction can proceed even in an environment with a small amount of ultraviolet rays such as an indoor space.

When CO₂ is reduced by the method and conditions described in the Examples under visible light irradiation using the reduction device, the amount of CO produced is, for example, 30 mol/g·h or more, preferably 50 mol/g·h or more, more preferably 100 mol/g·h or more, still more preferably 300 mol/g·h or more, and particularly preferably 500 mol/g·h or more.

When water is reduced by the method and conditions described in the Examples under visible light irradiation using the reduction device, the amount of H₂ produced is, for example, 10 mol/g·h or more, preferably 30 mol/g·h or more, more preferably 50 mol/g·h or more, still more preferably 100 mol/g·h or more, even more preferably 200 mol/g·h or more, and particularly preferably 300 mol/g·h or more.

Each aspect disclosed in the present description can be combined with another feature disclosed in the present description. The configurations, combinations thereof, or the like in each of the embodiments are exemplary, and additions, omissions, replacements, and other changes of the configurations may be made as appropriate without departing from the spirit of the present disclosure.

### Example

The present disclosure will next be described in more detail by way of Examples, but the present disclosure is not limited by the Examples and is limited only by the claims.

### (Preparation of cluster dispersion liquid (1))

Nitrogen-containing ζ-nanodiamond particles (N-nD, nitrogen atom concentration: 2%, zeta potential: -40 mV (at 25°C, ion concentration of 0.0001 M or less, and pH of 10), average primary particle size D50: 5 nm, trade name "DINNOVARE", available from Daicel Corporation) were taken in a glass container, ion-exchanged water was added such that the concentration of the nitrogen-containing ζ-nanodiamond particles was 1 mass%, and the mixture was stirred with a stirrer and thus uniformly dispersed. Thereby, a cluster dispersion liquid (1) containing nitrogen-containing ζ-nanodiamond particles was prepared.

### Example 1

A CO₂ reduction capability of the cluster dispersion liquid (1) prepared above when a mercury xenon light source (visible light irradiation intensity: 100%) with ultraviolet light cut off was used as a light source was measured by a CO₂ reduction capability evaluation method described below.

### Example 2

A CO₂ reduction capability of the cluster dispersion liquid (1) prepared above when a mercury xenon light source (visible light irradiation intensity: 10%) with ultraviolet light cut off was used as a light source was measured by a CO₂ reduction capability evaluation method described below.

### (Preparation of cluster dispersion liquid (2))

A cluster dispersion liquid (2) was prepared in the same manner as in the cluster dispersion liquid (1) except that the concentration of the nitrogen-containing ζ-nanodiamond particles was 5 mass%.

### Example 3

A CO₂ reduction capability of the cluster dispersion liquid (2) prepared above when a mercury xenon light source (visible light irradiation intensity: 100%) with ultraviolet light cut off was used as a light source was measured by a CO₂ reduction capability evaluation method described below.

### (Preparation of cluster dispersion liquid (3))

A cluster dispersion liquid (3) was prepared in the same manner as in the cluster dispersion liquid (1) except that nitrogen-containing ζ + nanodiamond particles (N-nD, nitrogen atom concentration: 2%, zeta potential: + 40 mV (at 25°C, ion concentration of 0.0001 M or less, and pH of 4), average primary particle size D50: 5 nm, trade name "DINNOVARE", available from Daicel Corporation) were used instead of the nitrogen-containing ζ-nanodiamond particles.

### Example 4

A CO₂ reduction capability of the cluster dispersion liquid (3) prepared above when a mercury xenon light source (visible light irradiation intensity: 100%) with ultraviolet light cut off was used as a light source was measured by a CO₂ reduction capability evaluation method described below.

### (Preparation of high dispersion liquid (1))

The same nitrogen-containing ζ + nanodiamond particles as those used in the cluster dispersion liquid (3) were taken in a glass container, ion-exchanged water was added such that the concentration of the nitrogen-containing ζ + nanodiamond particles was 1 mass%, and the mixture was stirred with a stirrer and thus uniformly dispersed. Thereafter, the dispersed mixture was brought into a highly dispersed state using a bead mill to prepare a high dispersion liquid (1) containing nitrogen-containing ζ + nanodiamond particles.

### Example 5

A CO₂ reduction capability of the high dispersion liquid (1) prepared above when a mercury xenon light source (visible light irradiation intensity: 100%) with ultraviolet light cut off was used as a light source was measured by a CO₂ reduction capability evaluation method described below.

### (Preparation of high dispersion liquid (2))

A high dispersion liquid (2) was prepared in the same manner as in the high dispersion liquid (1) except that the same nitrogen-containing ζ-nanodiamond particles as those used in the cluster dispersion liquids (1) and (2) were used instead of the nitrogen-containing ζ + nanodiamond particles.

### Example 6

A CO₂ reduction capability of the high dispersion liquid (2) prepared above when a mercury xenon light source (visible light irradiation intensity: 100%) with ultraviolet light cut off was used as a light source was measured by a CO₂ reduction capability evaluation method described below.

### Comparative Example 1

The CO₂ reduction capability was measured by the CO₂ reduction capability evaluation method described below in the same manner as in Example 1 except that a light shielding condition was used instead of the visible light irradiation condition.

### Comparative Example 2

The CO₂ reduction capability was measured by the CO₂ reduction capability evaluation method described below in the same manner as in Example 4 except that a light shielding condition was used instead of the visible light irradiation condition.

### Comparative Example 3

The CO₂ reduction capability was measured by the CO₂ reduction capability evaluation method described below in the same manner as in Example 5 except that a light shielding condition was used instead of the visible light irradiation condition.

### Comparative Example 4

The CO₂ reduction capability was measured by the CO₂ reduction capability evaluation method described below in the same manner as in Example 6 except that a light shielding condition was used instead of the visible light irradiation condition.

### (Method for evaluating CO₂ reduction capability)

The CO₂ reduction capability of the reduction device was measured by the following method.

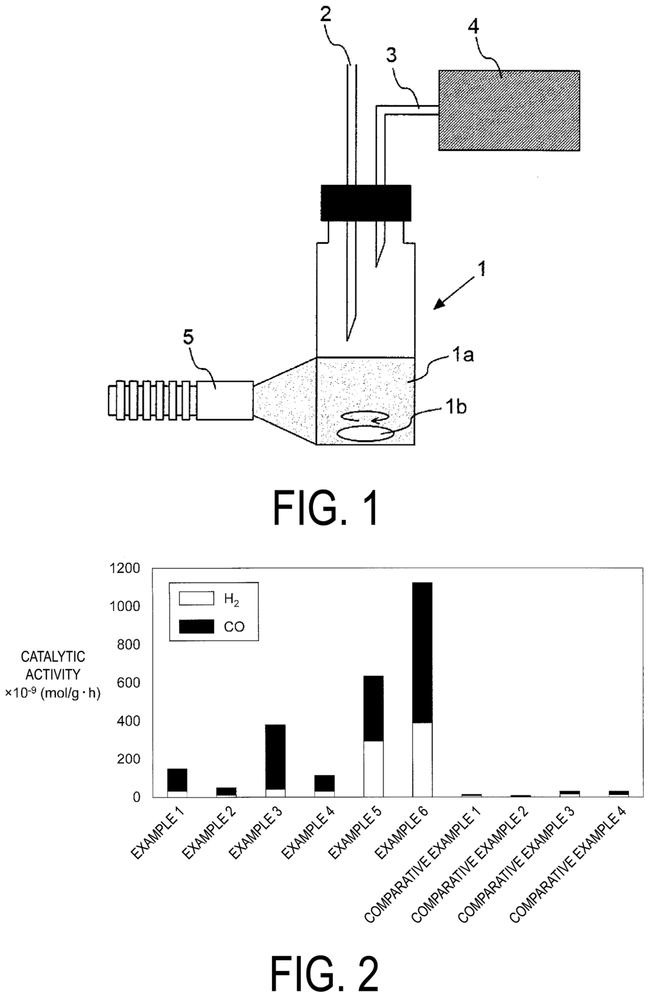

As shown in FIG. 1, a sample bag 4 (Smart Bag PA, CEK-1, available from GL Sciences Inc.) was attached to a reduction device 1 in which a diamond particle dispersion liquid 1a and a stirrer 1b were enclosed in a container, via a CO₂ gas inlet 2 and a gas outlet 3. In the case of performing visible light irradiation, ultraviolet light having a wavelength of less than 400 nm was cut with an optical filter (A9616-09, available from Hamamatsu Photonics K.K.), so that radiation light from a mercury xenon light source (L9588-04, available from Hamamatsu Photonics K.K.) having a wavelength of radiation light of from 400 nm to 1500 nm was introduced into a quartz optical fiber (A10014-70-0110, available from Hamamatsu Photonics K.K.), and the radiation light emitted from a fiber end 5 was irradiated toward the reduction device 1. At that time, the irradiation intensity of visible light was set to 10% or 100%, and the reduction device was installed at a position of 5 cm from the fiber end. Thereafter, CO₂ flow and the visible light irradiation were continued for 50 minutes while maintaining a CO₂ gas flow rate at about 3 mL/min, and then these were stopped simultaneously. A quantitative analysis of the volume of the mixed gas collected in the sample bag 4 and components contained therein was performed to calculate the production amounts of CO and H₂. The result is shown in Table 3 below. The unit of the production amounts of CO and H₂ is mol/g·h, which represents an amount of substance of CO and H₂ products in unit time and unit diamond particle mass.

A light amount of the light irradiated from the mercury xenon light source was the following light amount when the reduction device was assembled as shown in FIG. 1 with the ultraviolet ray having a wavelength of less than 400 nm being cut using the optical filter, and the light amount was measured at a position of 5 cm from the fiber end with an optical permeter (set to 600 nm).
Visible light irradiation intensity 100%: 200 mW/cm²
Visible light irradiation intensity 10%: 50 mW/cm²

### (Method for measuring zeta potential)

The zeta potentials of the diamond particles contained in the diamond particle dispersion liquid were measured by Laser Doppler electrophoresis using an instrument (trade name "Zetasizer Nano ZS") available from Malvern Panalytical Ltd. When the zeta potential was measured, the ion concentration in the dispersion liquid was 0.0001 M or less, and the diamond particles were subjected to a dispersion treatment (for example, ultrasonic treatment) such that the average dispersed particle size (D50) of the diamond particles was 100 nm or less. The pH of the diamond particle dispersion liquid was confirmed using pH test paper (trade name "Three Band pH Test Paper", available from AS ONE Corporation).

The results are summarized and shown in the following table 3 and FIG. 2.

### [Table 3]

**Table 3**

| | Diamond particle dispersion liquid | Visible light irradiation intensity | H₂ production amount (mol/g·h) | CO production amount (mol/g·h) |
|---|---|---|---|---|
| Example 1 | Cluster dispersion liquid (1) | 100% | 32.1 × 10⁻⁹ | 116 × 10⁻⁹ |
| Example 2 | Cluster dispersion liquid (1) | 10% | 11.1 × 10⁻⁹ | 36.9 × 10⁻⁹ |
| Example 3 | Cluster dispersion liquid (2) | 100% | 41.3 × 10⁻⁹ | 338 × 10 ⁻⁹ |
| Example 4 | Cluster dispersion liquid (3) | 100% | 30.1 × 10⁻⁹ | 81.1 × 10⁻⁹ |
| Example 5 | High dispersion liquid (1) | 100% | 293 × 10⁻⁹ | 339 × 10⁻⁹ |
| Example 6 | High dispersion liquid (2) | 100% | 388 × 10 ⁻⁹ | 735 × 10⁻⁹ |
| Comparative Example 1 | Cluster dispersion liquid (1) | 0% | 7.12 × 10⁻⁹ | 5.59 × 10⁻⁹ |
| Comparative Example 2 | Cluster dispersion liquid (3) | 0% | 3.03 × 10⁻⁹ | 3.94 × 10⁻⁹ |
| Comparative Example 3 | High dispersion liquid (1) | 0% | 15.6 × 10⁻⁹ | 13.6 × 10⁻⁹ |
| Comparative Example 4 | High dispersion liquid (2) | 0% | 12.7 × 10⁻⁹ | 17.5 × 10⁻⁹ |

Table 3 and FIG. 2 show that the reduction device of the present disclosure reduced CO₂ to produce CO and reduced water to produce H₂ under the visible light irradiation condition which was a low energy ray. The comparison between Example 1 and Example 2 reveals that the production amounts of CO and H₂ tended to increase by increasing the irradiation intensity of visible light. The comparison between Example 1 and Example 3 reveals that the production amounts of CO and H₂ tended to increase by increasing the concentration of the diamond particles. The comparison between Example 4 and Example 1 or between Example 5 and Example 6 reveals that when the zeta potential of the diamond particles was negative, the production amounts of CO and H₂ tended to increase. The comparison between Example 1 and Example 6 or between Example 4 and Example 5 reveals that the smaller the average dispersed particle size of the diamond particles, the larger the production amounts of CO and H₂.

To summarize the above, configurations and variations of the present disclosure are additionally described below.

[Supplementary note 1] A reduction device including diamond particles.

[Supplementary note 2] The reduction device according to supplementary note 1, in which the diamond particles are included as a diamond particle dispersion liquid.

[Supplementary note 3] The reduction device according to supplementary note 2, in which the diamond particle dispersion liquid includes water as a solvent.

[Supplementary note 4] The reduction device according to supplementary note 2 or 3, in which a concentration of the diamond particles in the diamond particle dispersion liquid is from 0.01 to 10 mass%.

[Supplementary note 5] The reduction device according to any one of supplementary notes 2 to 4, in which a total content ratio of the diamond particles and the solvent is 70 mass% or more with respect to a total amount of the diamond particle dispersion liquid.

[Supplementary note 6] The reduction device according to any one of supplementary notes 2 to 5, in which the diamond particle dispersion liquid includes a hole consuming agent.

[Supplementary note 7] The reduction device according to any one of supplementary notes 2 to 6, in which an average dispersed particle size of the diamond particles in the diamond particle dispersion liquid is from 1 nm to 100 µm.

[Supplementary note 8] The reduction device according to any one of supplementary notes 2 to 7, in which an upper limit of the average dispersed particle size is less than 50 nm.

[Supplementary note 9] The reduction device according to any one of supplementary notes 2 to 8, in which a haze value of the diamond particle dispersion liquid is 70% or less.

[Supplementary note 10] The reduction device according to any one of supplementary notes 1 to 9, in which the diamond particles include nanodiamond particles having a particle size of 1 µm or less.

[Supplementary note 11] The reduction device according to any one of supplementary notes 1 to 10, in which an upper limit of an average primary particle size of the diamond particles is 200 nm.

[Supplementary note 12] The reduction device according to any one of supplementary notes 1 to 11, in which the diamond particles include detonation nanodiamond particles.

[Supplementary note 13] The reduction device according to supplementary note 12, in which the detonation nanodiamond particles include air-cooled detonation nanodiamond.

[Supplementary note 14] The reduction device according to any one of supplementary notes 1 to 13, in which the diamond particles include diamond particles having a negative zeta potential.

[Supplementary note 15] The reduction device according to any one of supplementary notes 1 to 14, in which the diamond particles include diamond particles having a positive zeta potential.

[Supplementary note 16] The reduction device according to any one of supplementary notes 1 to 15, in which the diamond particles include hydrogen-terminated diamond particles.

[Supplementary note 17] The reduction device according to any one of supplementary notes 1 to 16, in which the diamond particles include diamond particles having a nitrogen atom concentration of from 0.1 to 10 mass%.

[Supplementary note 18] The reduction device according to any one of supplementary notes 1 to 17, in which the reduction device is of a visible light responsive type.

[Supplementary note 19] The reduction device according to any one of supplementary notes 1 to 18, in which the reduction device is a reduction device for hydrogen generation.

[Supplementary note 20] The reduction device according to any one of supplementary notes 1 to 18, in which the reduction device is a reduction device for producing carbon monoxide.

[Supplementary note 21] A method for producing a reduction substance, the method including reducing a reducible substance in the presence of the reduction device described in any one of supplementary notes 1 to 20 to produce a corresponding reduction product.

[Supplementary note 22] A method for producing hydrogen, the method including reducing water in the presence of the reduction device described in any one of supplementary notes 1 to 20 to produce hydrogen.

[Supplementary note 23] A method for producing carbon monoxide, the method including reducing carbon dioxide in the presence of the reduction device described in any one of supplementary notes 1 to 20 to produce carbon monoxide.

[Supplementary note 24] A reduction method including reducing a reducible substance in the presence of the reduction device described in any one of supplementary notes 1 to 20 to produce a corresponding reduction product.

[Supplementary note 25] A reduction method, including reducing water in the presence of the reduction device described in any one of supplementary notes 1 to 20 to produce hydrogen.

[Supplementary note 26] A reduction method, including reducing carbon dioxide in the presence of the reduction device described in any one of supplementary notes 1 to 20 to produce carbon monoxide.

### Industrial Applicability

Since the reduction device of the present disclosure is formed of diamond that is physically and chemically extremely stable, the catalyst life is long, the durability is excellent, and the use environment is not limited. Since the reduction device of the present disclosure can be manufactured by dispersing diamond in a solution, the reduction device is excellent in manufacturing cost and manufacturing efficiency. Since the diamond particles dispersed in the solution of the present disclosure have a large specific surface area, the diamond particles have a wide reaction field and are excellent in reaction efficiency. Furthermore, since the reduction device of the present disclosure can easily cause the reduction reaction to proceed by a low energy light such as visible light even without application of a voltage from the outside, the reduction device is suitable as, for example, a reduction device of a low environmental load type using sunlight.

### Reference Signs List

1 Reduction device
1a Diamond particle dispersion liquid
1b Stirrer
2 CO₂ gas inlet
3 Gas outlet
4 Sample bag
5 Fiber end

## Claims

1. A reduction device comprising diamond particles.

2. The reduction device according to claim 1, wherein the diamond particles are included as a diamond particle dispersion liquid.

3. The reduction device according to claim 1 or 2, wherein the diamond particles include nanodiamond particles having a particle size of 1 µm or less.

4. The reduction device according to claim 1 or 2, wherein the diamond particles include detonation nanodiamond particles.

5. The reduction device according to claim 1 or 2, wherein the diamond particles include diamond particles having a negative zeta potential.

6. The reduction device according to claim 1 or 2, wherein the diamond particles include diamond particles having a positive zeta potential.

7. The reduction device according to claim 1 or 2, wherein the diamond particles include hydrogen-terminated diamond particles.

8. The reduction device according to claim 1 or 2, wherein the diamond particles include diamond particles having a nitrogen atom concentration of from 0.1 to 10 mass%.

9. The reduction device according to claim 1 or 2, wherein the reduction device is of a visible light responsive type.

10. A method for producing a reduction substance, the method comprising reducing a reducible substance in the presence of the reduction device described in claim 1 or 2 to produce a corresponding reduction product.

11. A method for producing hydrogen, the method comprising reducing water in the presence of the reduction device described in claim 1 or 2 to produce hydrogen.

12. A method for producing carbon monoxide, the method comprising reducing carbon dioxide in the presence of the reduction device described in claim 1 or 2 to produce carbon monoxide.

13. A reduction method comprising reducing a reducible substance in the presence of the reduction device described in claim 1 or 2 to produce a corresponding reduction product.
